# EUROPEAN PATENT APPLICATION

(11) **EP 0 886 421 A1**
(43) Date of publication of application: **23.12.1998**
(21) Application number: 96902483.5
(22) Date of filing: 20.02.1996
(51) Int. Cl.: H04M 3/00

(54) **METHOD AND DEVICE FOR COMBINING COMMUNICATION CHANNELS**

(71) Applicant: Athena Telecom Lab, Inc., Koganei-shi, Tokyo 184 (JP)
(72) Inventor: KAMIMURA, Kunio, Tokyo 184 (JP)
(74) Representative: Desrousseaux, Grégoire Marie
(86) International application number: JP9600373
(87) International publication number: WO9731470

(57) **Abstract**

A combination of communication networks is treated as a communication network. A nested structure in which a combination of communication networks is designated in addition to the elements of the combination enables a complicated combination to be treated. The model of a communication channel provided by a plurality of communication networks is adapted to the model of a communication channel exclusively used for the combination of communication networks. Therefore, the system where communication channels are provided by a plurality of communication networks can be adapted without greatly changing a conventional communication network design system in which acceptance of provision of communication channels from one communication network for every communication link is premised. The serial connection of communication channels is achieved by a combination of a central communication channel and the accessing communication channels used for making access to the central communication channel. It is possible to make a combination ofcommunication channels connected in many stages. This is practical in that the communication channels which are decisive factors in determining the price and quality are determined first. This invention is effective to utilize communication channels provided by internets and many commercial communication networks.

## Description

### TECHNICAL FIELD

### 〈〈Section 1: Technical field〉〉

The present invention relates to the method and the apparatus for obtaining a combination of communication circuits, which is used for generating design drawings for communications networks or communication circuits connecting assigned points.

### BACKGROUD ART

### 〈〈Section 2: Communication circuit〉〉

Communication circuits are physical media such as optical fibers, satellite circuits, twisted pair cables, circuits provided as services of the communications networks such as leased circuits of NTT, communication circuits provided as logical connections such as the VC (Virtual Circuit) of ATM communication, and media or circuits such as the Ethernet to which over three communication apparatuses can be connected.

### 〈〈Section 3: Combination of circuits of designated communication area〉〉

Evolution of information networks brought the world many communications networks. For example, the Internet provides inexpensive communication circuits, which pass through communication circuits and computers both of them are provided voluntary. Meanwhile, some commercial communications networks provide high quality communication circuits superior in confidentiality maintenance or availability. Based on their management strategies, the communications networks determine and present their users the menus of provision communication circuits showing grade, price, quality of service, and area for the communication circuits to be provided. For users, it is the big problem how to combine, select, and utilize the communication circuits provided by plural communications networks.

Even after the communication circuits were set up once, they might be dynamically changed in accordance with the situation of the traffic fluctuation or of disaster. This change might be carried out either automatically or by human beings. In any case, it is required to regenerate design drawings for combinations of communication circuits or communication media, which connect communication points, and to evaluate their possibility of realization and effectiveness. After these activities, one can issue requests for communication circuits or communication media, and orders to combine them.

### 〈〈Section 4: Design procedure of communication networks〉〉

One first needs to generate a design drawing for communications network in order to construct the communications network. This design is a model expressing a structure of the communications network, and a model of communications network is composed of models of communication circuit or communication apparatus. If one can not generate the model of communications network that fulfills assigned conditions, then one can not realize the actual communications network. However, if one can generate the model of communications network, then one use this model and evaluates price, quality of service, and so on.

Main constituent elements of the communications networks are communication apparatus and communication circuit. A place where the communication apparatus is set up is called the communication point (or the communication node). A logical combination of communication points is called the communication link. One needs to clarify how the communication circuit realizing the communication link (that connects communication points) is provided when generating the models of communications networks. In conventional design procedures for communications networks, the communication circuits provided for every communication links are provided by one communications network or one kind of transmission media. Although the design procedure of communications networks was simplified due to this simplification, it was still lacking accuracy in some cases.

### 〈〈Section 5: Example of combination of communication circuits〉〉

Combinations of communication circuits connecting the communication points can be classified into 〈〈parallel combination〉〉 and 〈〈serial connection〉〉. Their embodiments are shown in the followings.

### 〈〈Section 5.1: Parallel combination〉〉

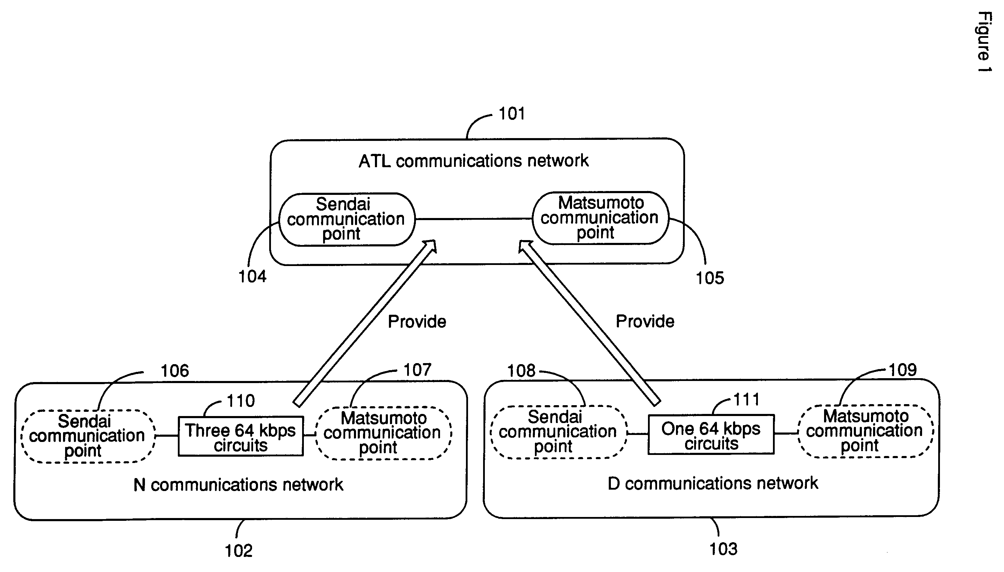

FIG. 1 explains the parallel combination with the communication circuit that connects Sendai communication point 104 with Matsumoto communication point 105 of ATL communications network 101. Communication circuit (such as three 64kbps circuits) 110 that connects Sendai communication point 106 with Matsumoto communication point 107 is provided by N communications network 102. Communication circuit (such as one 64kbps circuit) 111 that connects Sendai communication point 108 with Matsumoto communication point 109 is provided by D communications network 103; ATL communications network 101 uses both of these communication circuits (total of four 64kbps circuits). This is the 〈〈parallel combination〉〉. Three Sendai communication points (104, 106, 108) are identical and are the communication points of ATL communications network 101, as three Matsumoto communication points (105, 107, 109) are also identical and are the communication points of ATL communications network 101.

### 〈〈Section 5.2: Serial connection〉〉

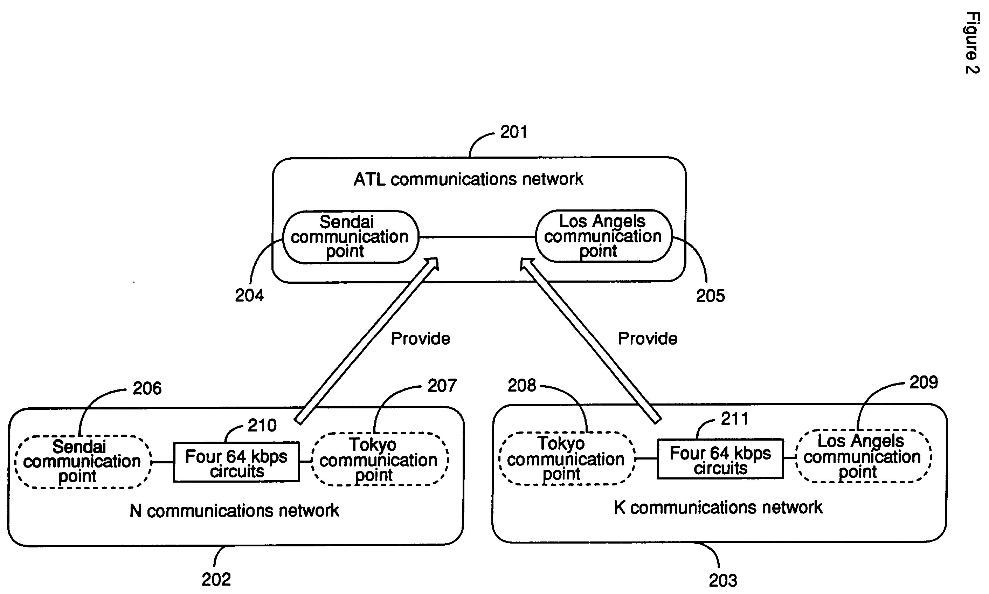

FIG. 2 explains the serial connection with the communication circuit that connects Sendai communication point 204 with Los Angeles communication point 205 of ATL communications network 201. This communication circuit is composed of communication circuits (such as four 64kbps circuits) 210 provided by N communications network 202, which connects Sendai communication point 206 with Tokyo communication point 207, and communication circuits (such as four 64kbps circuits) 211 provided by K communications network 203, which connects Tokyo communication point 208 with Los Angeles communication point 209. These communication circuits are connected at Tokyo communication point of K communications network 203. This is the 〈〈serial connection〉〉. Two Sendai communication points (204, 206) are identical and are the communication points of ATL communications network 201. Two Los Angeles communication points (205, 209) are also identical and are the communication points of ATL communications network. Moreover, two Tokyo communication points (207, 208) are identical and are the communication points of K communications network 203.

### 〈〈Section 6: Limit of the shortest path search algorithm〉〉

It is possible, in principle, to use variously designed shortest path search algorithms in order to obtain the serial connection of communication circuits. For example, the path, the serial connection of the most inexpensive communication circuits is obtained by assuming the price of communication circuits as its value.

In order to obtain the serial connection of communication circuits by using the shortest path search algorithm, all communication circuits that have possibility of usage have to be provided in advance as arcs of a graph (that will be searched by the algorithm). However, under the situation this invention supposes, there is a menu, that shows conditions of communication circuits to be provided. In other words, it supposes more realistic conditions that 〈〈the communication circuits are provided by communications network only when the users request for them〉〉. It is difficult to apply the shortest path search algorithm that was originally designed for mathematically abstracted conditions to more realistic conditions this invention supposes.

Many of the shortest path search algorithms find the path that connects the assigned communication points by sequentially tracing communication circuits started from a communication circuit connected to a communication point at one end of the path. However, a circuit that is directly connected to a communication apparatus set inside a building is the local area wiring inside the building. A procedure for finding the shortest path by assuming all possible structures of local area wiring and by searching combinations of connected apparatuses or circuits is impossible since a number of those combinations becomes an astronomical figure.

The shortest path search algorithm mainly aims at searching the best path under the mathematically arranged condition. However, in reality, we first need to find out find the serial connection of communication circuits, which can be realized, before applying the algorithm. It is practical to obtain plural realistic serial connections of communication circuits and select the best among them. This is the difference between the mathematical algorithm and the device for solving actual problems.

### DISCLOSURE OF THE INVENTION

### 〈〈Section 7: Menu of communication circuits〉〉

Communications network provides communication circuits. It determines grade, price, quality of service of providing communication circuits, and area for providing them. They are constituent elements of menu of communication circuits that can be provided by communications network. According to this menu, the communications network provides communication circuits in response to users' demands. It sometimes uses a facility that has been already existing as a part of the communications networks. In some cases, it also provides communication circuits by expanding the facility of communications networks in response to users' demands. Data shown in this menu are price list (tariff), service stipulations, technical standards and so on. These data are simply called as 〈〈menu〉〉.

When one needs a communication circuit, one have to request for it to the communications networks. And computer generates a model of communication circuits by referring the menu. By an object-oriented programming, the model of communication circuits (the object) is requested to (the object of) communications network (that maintains the menu.) The model of communication circuits here means a memory block that contains data indicating specifications of the communication circuits. The communication circuits that will be mentioned without special notice in the following mean the models of communication circuits. Since the menu of providing communication service is enough for providing services by a computer, there is no need that body of communications network exists.

Even when the transmission media is used to implement a communication link, they can be treated as if a communications circuit provided by a communications network, introducing artificial menu for them.

### 〈〈Section 8: Communication network defined as a combination of communication networks〉〉

The conventional design procedure of communications networks has been assuming that a circuit realizing one communication link is requested to one communications network. In order to request the circuit realizing one communication link to several communications networks, a program of the design procedure for communications network might has to be changed drastically.

The first device of this invention is to 〈〈handle a combination of communications networks as one communications network〉〉. In other words, it requests a communication circuit to the communications network that is a combination of communications networks. The procedure defined for the combination of communications networks convert this request into requests to individual communications networks, which are elements of the combination. This idea corresponds to Claim 1 and 7. Details of this conversion procedure are shown in the following sections: 9.6, 10, 15.2, 15.4, 16.2 and 16.4.

Due to this device, the drastic change is no longer needed for the conventional design procedure of communications networks. In other words, the program of the design procedure of communications networks can request, as before, the communication circuits to one communications network that is, in fact, a combination of communications networks.

To use various combinations of communications networks, one should assign a combination of communications networks as a element of other combination of communications networks. A nested structure, in which a combination of communications networks is assigned as a element of the combination of communications networks, enables us to treat complicated combinations. For example, some elements of a parallel combination of communication circuits can be serial connections of communication circuits. The reverse conversion is also possible. Section 12 shows an example to illustrate them. This is also the effect of treating a combination of communications networks as one communications network.

### 〈〈Section 9: Method for obtaining serial connection〉〉

This invention assumes the serial connection of communication circuits to be a combination of a central communication circuit and an accessing communication circuit used for making access to the central communication circuit. For example, when connecting Sendai communication point with Los Angeles communication point, it first selects international circuit, and then selects national circuits as its accessing communication circuits. It further determines a local area wiring inside a building, which connects the national circuit with a network apparatus if it is necessary. Details are shown in the following.

### 〈〈Section 9.1: Designation of serial connection of communications networks〉〉

This invention introduce a combination of communications networks, which provides the serial connection of communication circuits by a combination of one main communications network and either a single or plural peripheral communications networks. And it assigns, to each peripheral communications network, covering area and a communication point of the main communications network as a substitute communication point. Besides, one can assign some communication point other than the communication points of the main communications network as the substitute communication point. It yields various effects depending on what communication point is assigned. Details of these effects will be explained in Section 9.4. The method for obtaining the serial connection of communication circuits will be explained in Section 9.2 with the above information.

If plural main communications networks are defined, it selects one main communications network at each time it obtains one serial connection of communication circuits (c.f. Section 9.10). It sometimes selects peripheral communications networks one by one and makes each one to be the main communications networks without specifically assigning the main communications networks (c.f. Section 9.11). In either method, one main communications network and either a single or plural peripheral communications networks exist when obtaining one serial connection of communication circuits.

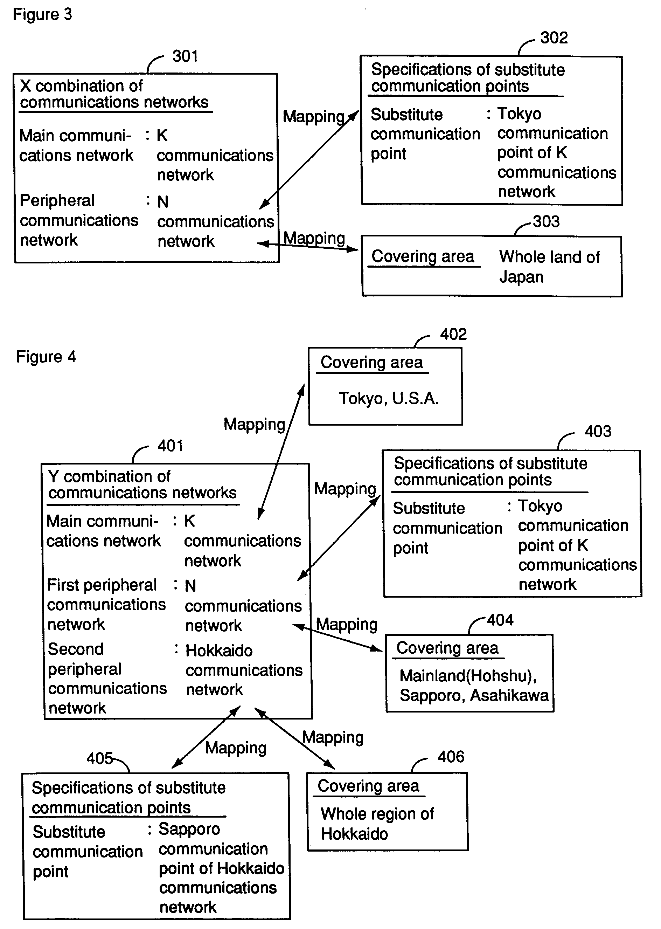

FIG. 3 shows an example of the designation of a combination of communications networks, which can be used for obtaining the serial connection in FIG.2. It assigns, to X combination of communications networks 301, K communications network as the main communications network, N communications network as the peripheral communications network, Tokyo communication point of K communications network as specifications of substitute communication points 302 of N communications network, and whole land of Japan as covering area 303 of N communications network.

### 〈〈Section 9.2: Typical step for obtaining serial connection〉〉

The first step is to verify whether the main communications network can treat all of communication points connected by requested communication circuits. If the main communications network can treat all of them, then the step will be finished by providing circuits of the main communications network.

It is untreatable, if a communication point is out of the service area of the main communications network. Then, the procedure tries to connects the communication point untreatable by the main communications network with the communication point of the main communications network that is assigned as the substitute communication point of the peripheral communications network, by using a communication circuit provided by the peripheral communications network. This peripheral communications network is selected, since the covering area of the peripheral communications network covers the untreatable communication point.

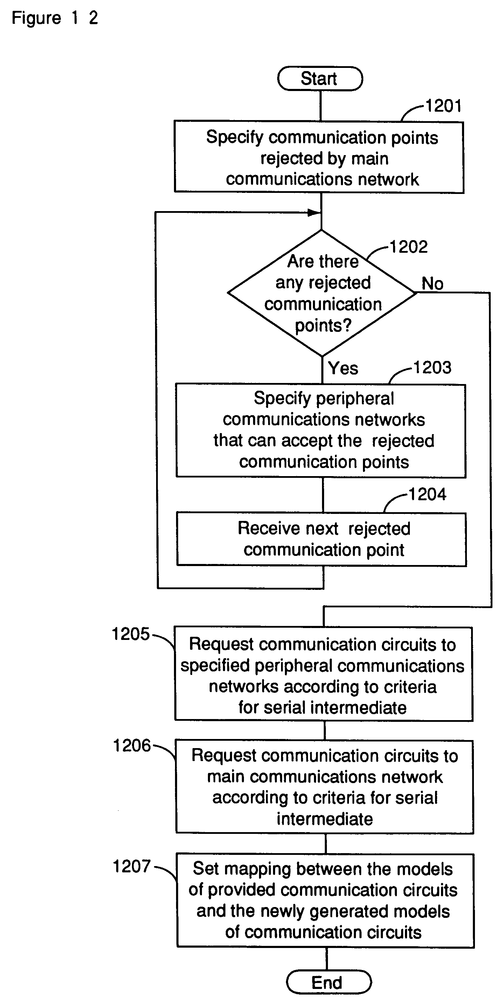

The main communications network provides a communication circuit connecting the substitute communication points with the communication point that is treatable by the main communications network. This combination is the serial connections of communication circuits. In this way, communication circuits of a peripheral communications network are used in the area, in which no circuits of the main communication network can work. In other words, the procedure mainly uses the communication circuits provided by the communications network that provides the most important communication circuit and uses accessing communication circuits only when they are necessary. This idea corresponds to Claim 5. Claim 11 represents this idea by apparatuses. This is valuable in practical use since it first determines the communication circuits that will be the main factor of determining the price, quality of service, and so on. This procedure will be explained in Section 15.2 by flow chart of FIG. 12, and in Section 16.2 by block diagram of FIG. 16.

Claim 4 (and 10) is the one omitting the procedure (and means) for requesting the accessing communication circuits from Claim 5 (and 11). Suppose that the main circuit was unable to connect communication points that are first requested, and that some communication points are replaced with another communication points, and circuits connecting those communication points were provided. The procedure (and means) for adding accessing communication circuits to the circuit is omitted in Claim 4 (and 10). If one changes the structure of user side communications networks when obtaining the main circuit that can be realized, it is useful even without the accessing communication circuits.

### 〈〈Section 9.3: Example of obtaining serial connection〉〉

An example to obtain the serial connection of FIG. 2 is explained, by using a combination of communications networks of FIG. 3. Suppose the procedure requests a circuit connecting Sendai communication point 204 with Los Angeles communication point 205 of ATL communications network 201 to X combination of communications networks 301 as the original request for communication circuit. If Tokyo is the only national service point of K communications network 203 at this time, Sendai communication point 204 is untreatable. In other words, K communications network 203 cannot be adapted to this first request for communication circuit. Thus, the procedure will examine peripheral communications networks.

Sendai communication point 204 rejected by the main communications network is included in the whole land of Japan, the covering area of N communications network 202. Thus, the procedure requests, to N communications network 202, for a communication circuit connecting Sendai communication point 204 with Tokyo communication point 207 of K communications network assigned as the substitute communication point of N communications network. As a result, communication circuits (such as four 64kbps circuits) connecting Sendai communication point 206 with Tokyo communication point 207 is provided.

It further requests, to the main communications network that is K communications network 203, for a communication circuit connecting Tokyo communication point 208 of K communications network, which is the substitute communication points, with Los Angeles communication point 205. As a result, communication circuits (such as four 64kbps circuits) connecting Tokyo communication point 208 with Los Angeles communication point 209 is provided. A combination of communication circuits provided in the above is the serial connection of communication circuits for the original request.

### 〈〈Section 9.4: Specifications of substitute communication points〉〉

In aforementioned example, substitute communication points were the communication points of the main communications network, which substitute the communication points rejected by the main communications network.

However, communication points assigned by the specifications of substitute communication points can be the communication points other than that of the main communications network. In this case, the procedure will find communication point that further substitutes a substitute communication point of a communication point rejected by the main communications network. Details will be explained in Section 9.9.

The procedure can also assign, to the specifications of substitute communication points, 〈〈location〉〉 for the substitution point for the communication point rejected by the main communications network will. For example, suppose that specifications of substitute communication points 302 of FIG. 3 indicate 〈〈substitute location〉〉 and 〈〈Tokyo〉〉 as assigned location.

The procedure asks a substitution communication point of Tokyo of the main communications network (K communications network) as substitution point, and requests to a peripheral communications network (N communications network), for a communication circuit that connects the substitution point with Sendai communication point rejected by the main communications network with. If Tokyo communication point does not exist, then it actually generates Tokyo communication point on the main communications network. In addition to it, the procedure also asks the communication point of Tokyo on the peripheral communications network (N communications network).

If one assign communication points as the specifications of substitute communication points, the communication points should exist on either the main communications network and on peripheral communications network at the time of this assignment. Meanwhile, if a location has been assigned, the procedure will generate a communication point on the location only when it is necessary.

When generating design drawings for communications networks, it is preferred that the procedure generates only the really needed communication points rather than it prepares all communication points that have possibility of utility. The method for assigning the location as the specifications of substitute communication points is useful in this case.

### 〈〈Section 9.5: Covering area〉〉

In Section 9.1, the procedure assigned the covering area to the peripheral communications network. And in Section 9.2, a peripheral communications network is selected to provides the accessing communication circuits, since of which covering area covers the communication point rejected by the main communications network.

One can assign a part of or whole of area where the communication communications network can provide communication services (c.f. Section 9.7). For example, one specify that 〈〈provide only the communication circuits between Tokyo and Osaka〉〉 or that 〈〈provide the communication circuits only at Tokyo communication point〉〉.

Meanwhile, the procedure also works without assigning the covering area of peripheral communications network. The procedure can selects a peripheral communications network that can provide communication circuits, by examining every peripheral communications networks whether it can provide the circuits connecting communication points rejected by the main communications network with the substitute communication points of this peripheral communications network. The possibility of the provision of the communication circuits can be seen as the answer of requesting models of communication service to models of a peripheral communications network.

### 〈〈Section 9.6: Criteria for serial intermediate〉〉

〈〈Criteria for serial intermediate〉〉 is criteria for converting the original request for communication circuits to a serial connection of communications networks into requests for communication circuits to the main communications network and a peripheral communications network. This idea corresponds to Claim 1 and 7.

One of serial intermediate is 〈〈simple intermediate〉〉. It simply copies the original request for the communication circuits and makes requests to the main communications network and a peripheral communications network. For example, when 〈〈four 64kbps circuits〉〉 are requested to a combination of communications networks, it requests 〈〈four 64kbps circuits〉〉 to both the main communications network and a peripheral communications network.

Another one of serial intermediate is 〈〈main communications network initiative intermediate〉〉. First of all, it simply copies the original request for communication circuits and makes a request to the main communications network. For example, the procedure requests 〈〈four 64kbps circuits〉〉 to the main communications network, when 〈〈four 64kbps circuits〉〉 are requested to a combination of communications networks. However, the circuits provided against the requests are not necessarily the expected circuits. If the main communications network only provides circuits by a group of ten, then 〈〈ten 64kbps circuits〉〉 will be provided. The 〈〈main communications network initiative intermediate〉〉 requests to a peripheral communication network for the communication circuits with same specifications of the one provided by the main communications network. In the above example, it requests 〈〈ten 64kbps circuits〉〉 to the peripheral communications network.

### 〈〈Section 9.7: Plural peripheral communications networks〉〉

In the example of serial connection of Section 9.3, the peripheral communications network was only one. However, plural peripheral communications networks actually can be assigned as explained in Section 9.1. If a circuit connects two points, then two peripheral communications networks can be assigned since it has two parts of accessing communication circuits. The broadcasting type communication circuits connecting n-points (more than two points) have the accessing communication circuits in n-parts; therefore, n-pieces of peripheral communications networks can be assigned.

One can assign several communications networks to one part of accessing communication circuit. For example, suppose the following situations. The main communications network is K communications network. The first peripheral communications network is N communications network, of which covering area is the whole land of Japan and the substitute communication point is Tokyo communication point of N communications network. The second peripheral communications network is D communications network, of which covering area is Sendai and nearby and Tokyo circumference and nearby and the substitute communication point is Tokyo communication point of D communications network. When Sendai communication point of ATL communication network is rejected by the main communications network, that is K communications network, then both peripheral communications networks can provide accessing communication circuits. And K communications network can treat both Tokyo communication point of N communication network and Tokyo communication point of D communication network.

One way is to use the accessing communication circuit found in the first try. Another method is to selects the best one by steps for evaluating plural candidates. The other method is to generates plural serial connections for plural candidates, and then selects the best one among them.

### 〈〈Section 9.8: Plural specification of substitute communication points〉〉

Plural representative communication points can be defined for one peripheral communications network. For example, suppose that the procedure assigns A communications network as a peripheral communications network and communication point a1 and communication point a2 as substitute communication points of A communications network. If a communication point rejected by the main communications network is Sendai communication point, then a communication circuit connecting Sendai communication point with communication point a1 and a communication circuit connecting Sendai communication point with communication point a2 will be candidates. One embodiment can selects the best evaluated circuit among them, whereas the other embodiment generates plural serial connections for every one of these plural communication circuits and then selects the best evaluated serial connection.

Instead of assigning plural specifications of substitute communication points to one peripheral communications network, same specifications can be referred from plural peripheral communications networks. The procedure assigns A communications network as one peripheral communications network and communication point a1 as its substitute communication point. It assigns A communications network again as a different peripheral communications network and communication point a2 as its substitute communication point.

In addition, it can also assign covering area to each peripheral communications network. For example, it assigns N communications network as a peripheral communications network, East Japan as its covering area, and Tokyo communication point as a substitute communication point. It assigns N communications network again as a different peripheral communications network, West Japan as its covering area, and Osaka communication point as a substitute communication point. It means that by dividing the covering area of N communications network into East Japan and West Japan, the respective representative communication points will be Tokyo communication point and Osaka communication point.

### 〈〈Section 9.9: Series of peripheral communication〉〉

Even if the procedure succeeds in providing a circuit connecting a communication point rejected by the main communications network with a substitute communication point of peripheral communications network, the substitute communication point is sometimes rejected by the main communications network. An example is that a substitute communication point is not a communication point of the main communications network. One way is to give up to make a serial connection of communication circuits.

Another way is to searches other peripheral communications networks for the rejected substitute communication point. This is already mentioned in Section 9.4. For example, first define Y combination of communications networks 401 of FIG. 4. And assigns K communications network as the main communications network and Tokyo and U.S.A. as its covering area 402. Assigns N communications network as the first peripheral communications network and mainland, Sapporo, and Asahikawa as its covering area 404. Assigns Tokyo communication point of K communications network as specifications of substitute communication points 403 and Hokkaido communications network as the second peripheral communications network, and whole region of Hokkaido as its covering area 406 and Sapporo communication point of Hokkaido communications network as specifications of substitute communication points 405.

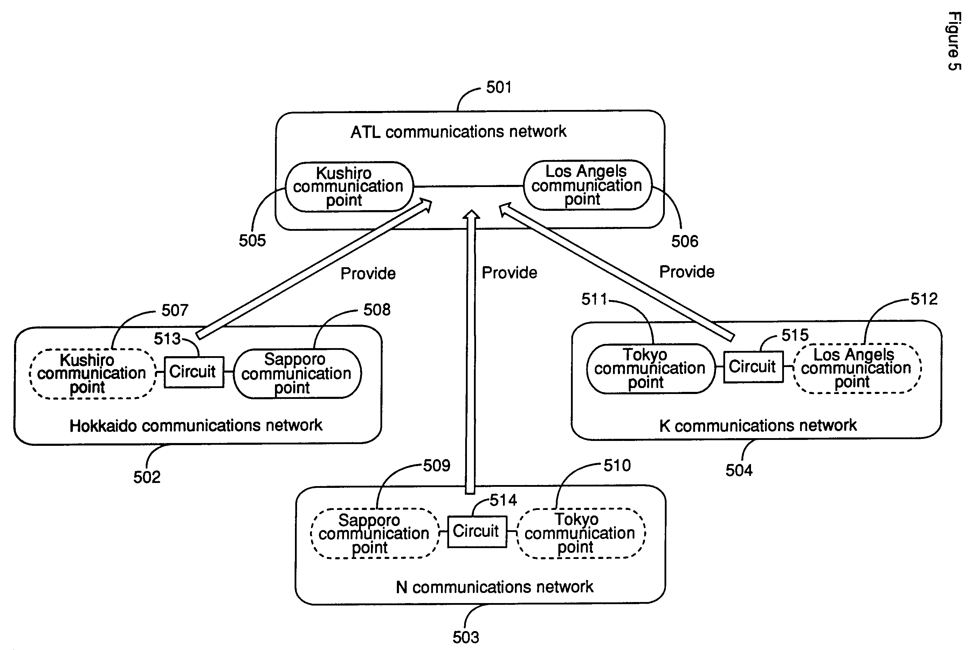

Suppose that a circuit connecting Kushiro communication point 505 with Los Angeles communication point 506 of ATL communications network 501 shown in FIG. 5 is requested as the original request for communication circuits to Y combination of communications networks 401. Kushiro communication point 505 is out of covering area 402 of K communications network and covering area 404 of N communications network. Since covering area 406 of Hokkaido communications network, that is the second peripheral communications network, covers Kushiro communication point 505, the procedure requests to Hokkaido communications network 502, for a communication circuit connecting its substitute communication point, that is Sapporo communication point 508, with Kushiro communication point 507 of Hokkaido communications network.

However, Sapporo communication point 508 is still out of covering area 402 of K communications network, that is the main communications network. Thus, the procedure reexamines peripheral communications networks. Since covering area 404 of N communications network covers Sapporo communication point 508, it requests to N communications network 503 for a communication circuit connecting its substitute communication point, that is Tokyo communication point 510, with Sapporo communication point 509 of K communications networks. And since Tokyo communication point 511 is covering area of the main communications network, that is K communications network, it requests to K communications network 504 for a circuit connecting Tokyo communication point 511 with Los Angeles communication point 512. Kushiro communication point and Los Angeles communication point of ATL communications network can be connected combining communication circuits provided for the above requests.

Two Kushiro communication points (505, 507) here are identical and are communication points of ATL communications network 501. Two Los Angeles communication points (506, 512) are identical and are communication points of ATL communications network 501. Two Sapporo communication points (508, 509) are identical and are communication points of Hokkaido communications network 502. Two Tokyo communication points (510, 511) are identical and are communication points of K communications network 503.

### 〈〈Section 9.10: Plural main communications〉〉

Although the main communications network was considered to be only one in aforementioned explanation, it can be plural. If there are plural main communications networks, then the procedure should apply the aforementioned steps by focusing only one main communications network. And it should repeat these steps by changing the focused main communications network. The procedure will be finished when it obtains the serial connection of communication circuits corresponding to the original request for communication circuits. Another embodiment is to select the best one by estimating the serial connection of communication circuits that can be obtained by different main communications networks.

### 〈〈Section 9.11: Assignment of main communications network〉〉

A communications network assigned as a peripheral communications network can be a main communications network without specifically assigning the main communications network. Suppose we define A communications network and B communications network as the peripheral communications networks. If we assign A communications network as the main communications network, B communications network becomes the peripheral communications network. If we assign B communications network as the main communications network, A communications network becomes the peripheral communications network. Using a combination of communications networks like this, the procedure can assign only the peripheral communications network for a combination of communications networks.

### 〈〈Section 10: Parallel combination〉〉

Plural communications networks are assigned for a combination of communications networks used for the parallel combination. This combination is also treated as a communications network (c.f. Section 8). Communications networks of serial combination also can be the elements of the parallel combination. 〈〈Criteria for parallel intermediate〉〉 is criteria of conversion from a request for communication circuits to the parallel combination into a request for communication circuits to elements of the combination. This idea corresponds to Claim 1 and 7.

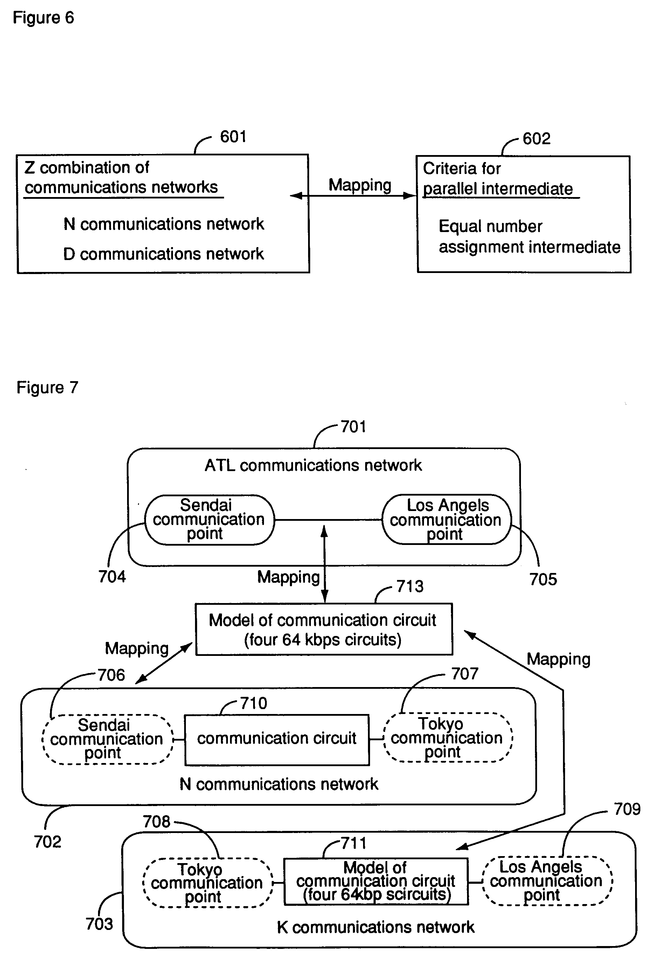

FIG. 6 shows an example of the parallel combination. N communications network and D communications network are assigned for Z combination of communications networks 601. The 〈〈criteria for parallel intermediate〉〉 602 is applied to a combination of communications networks. One example of the criteria for parallel intermediate is the 〈〈perfect reproduction intermediate〉〉. When 〈〈four 64kbps circuits〉〉 are requested to Z combination of communications networks 601, the procedure requests 〈〈four 64kbps circuits〉〉 to N communications network and D communications network. Total of eight circuits will be provided if both provide them.

When 〈〈four 64kbps circuits〉〉 are requested to Z combination of communications networks 601, 〈〈Equal number assignment intermediate〉〉 requests 〈〈two 64kbps circuits〉〉 to N communications network and D communications network. Total of four circuits will be provided if both provide them. 〈〈Equal speed assignment intermediate〉〉 is the following. When 〈〈four 64kbps circuits〉〉 are requested to Z combination of communications networks 601, a total speed is 256kbps. By dividing this value by the assigned numbers of communications networks, that is 2, it gets 128kbps. Then, the procedure requests 〈〈one 128kbps circuit〉〉 to N communications network and D communications network. Total speed will be 256kbps if both provide circuits.

There is an intermediate that requests different numbers or speed to each communications networks, that are members of a combination of communications networks. For example, it requests 75% of number of the original request to N communications network and 50% to D communications network. The total is not necessarily 100%. If the total exceeds 100%, then this will be the surplus (prepared for unexpected situation).

We can add steps to request circuits again by examining specifications of provided circuit against requests according to the above criteria for intermediate. For example, suppose that the procedure requests 〈〈two 64kbps circuits〉〉 to N communications network and D communications network by 〈〈equal number assignment intermediate〉〉. Then 〈〈two 64kbps circuits〉〉 are obtained from N communications network, and 〈〈one 64kbps circuit〉〉 is obtained from D communications network. In other words, D communications network could not realize the request perfectly. In this case, 〈〈one 64kbps circuit〉〉 would be requested to N communications network as an addition.

As a result of intermediate, there may be remnants in number, or improper speed of circuits. Even in this case, the steps to request circuit again by examining the specification of provided circuits still have the meaning. We can simplify this procedure by assuming that the excessive (number is greater, speed is higher, and so on) circuits are always provided.

〈〈Sequential intermediate〉〉 is the following. When 〈〈four 64kbps circuits〉〉 are requested to Z combination of communications networks, the procedure first makes the same request to N communications network. If these circuits are not provided, it then makes the same request to D communications network. It can also request to D communications network for the insufficient number or speed against circuits provided by N communications network. If we indicate the order to intermediate this request, we assign data of order to each communications networks of the combination.

### 〈〈Section 11: Connection of communication circuit models〉〉

In either serial connection or parallel combination, the procedure converts (intermediates) the original request for communication circuits to a combination of communications networks into the request for communication circuits to communications networks, that are the element of a combination of communications networks. Models of communication circuits obtained as a result of above requests are called 〈〈element communication circuit models〉〉. There are two methods to make the element communication circuit model against the original request, as follow.

One way is to newly define a model of communication circuit exclusively used for a communications network defined by a combination of communications networks and to make mappings between it and the element communication circuit models. FIG. 7 shows an example, assuming as follows. A model of communication circuit (such as four 64kbps circuits) 710 connecting Sendai communication point 706 with Tokyo communication point 707 is provided by N communications network 702. A model of communication circuit (such as four 64kbps circuits) 711 connecting Tokyo communication point 708 with Los Angeles communication point 709 is provided by K communications network 703. They are provided against the request for a communication circuit connecting Sendai communication point 704 with Los Angeles communication point 705 of ATL communications network 701 in FIG. 7. At this point, the procedure newly generates a model of communication circuits 713 (such as four 64kbps circuits) and sets up a mapping relationship between it and the aforementioned models of communication circuits.

Model of communication circuit 713 connecting Sendai communication point 704 with Los Angeles communication point 705 is a model of ATL communications network 701. The structure of this model of communications network is just as simple as the one first considered. Tracing the mapping relationships from the model of communication circuit 713, we can access to the model of communication circuit 710 provided by N communications network 702 and to the model of communication circuit 711 provided by K communications network 703.

Above method provide us the same interface to request communication circuits, by simply assigning communications network or by assigning a combination of communications networks. Therefore, the conventional algorithm that generates models of communications networks can be used as it is. We can keep each model simple, by treating a model of communications network and a model of the combination separately. This idea corresponds to Claim 2 and 8.

The other way is to use element communication circuit models themselves as responses to the original request for the communication circuits. This method is useful if the requesting side communication network directly treats the element communication circuit models.

### 〈〈Section 12: Combination of communications network combinations〉〉

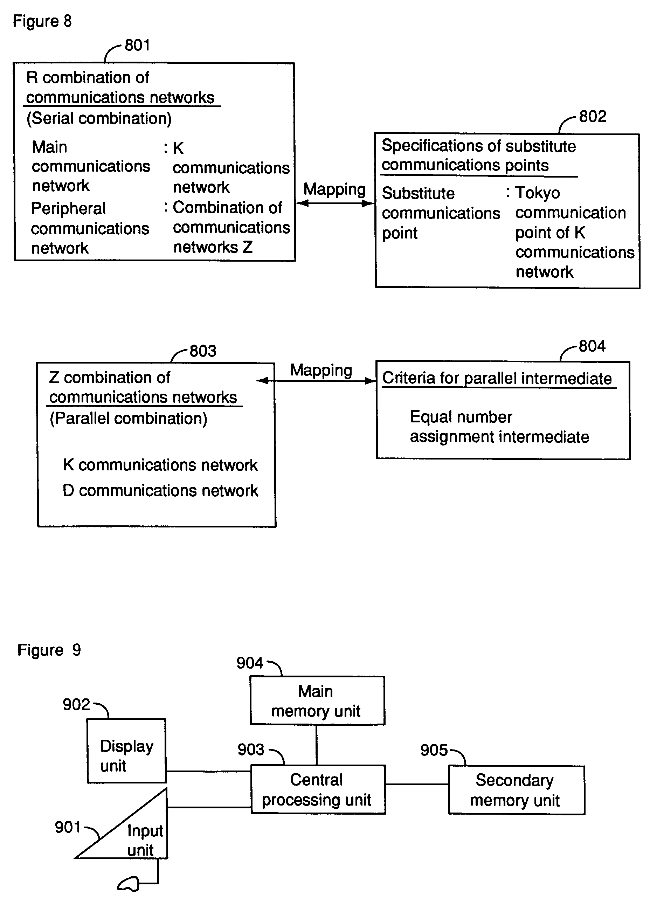

Since a combination of communications networks is treated as a communications network, the procedure can further assigns a combination of communications networks to another combination of communications networks. FIG. 8 shows an example. It assigns K communications network as main communications network of R (serial) combination of communications networks 801 and Z combination of communications networks as peripheral communications network. N communications network and D communications network have been assigned for (parallel) Z combination of communications networks 803.

Suppose that the procedure requests communication circuits (such as four 64kbps circuits) to connect Sendai communication point with Los Angeles communication point of ATL communications network by assigning R combination of communications networks 801. At this time, circuits (such as four 64kbps circuits) connecting Los Angeles communication point of ATL communications network with Tokyo communication point of K communications network are provided by K communications network. Moreover, N communications network provides circuits (such as two 64kbps circuits) connecting Tokyo communication point of K communications network with Sendai communication point of ATL communications network. D communications network provides circuits (such as two 64kbps circuits) connecting Tokyo communication point of K communications network with Sendai communication point of ATL communications network.

We can combinations of communication circuits, by assigning a combination of communication circuits as a member of another combination of communication circuits.

### 〈〈Section 13: Correspondence with claims〉〉

Claim 1 and correspond to the procedure and means for defining a combination of communications networks as a communications network, and for converting a request for communication circuits into requests of communication circuits to communications networks, which are the constituent element of the combination. By this device, a request for communication circuits to plural communications networks can be treated just as same as a request to one communications network. Moreover, further assignment of a combination of communications networks as a member of another combination of communications networks enables us to define more complicated combination of communication circuits.

Claim 2 and 8 are correspond to the procedure and means for assigning the element communication circuit models (c.f. Section 11) obtained by members of the combination of communications networks, to communication circuits exclusively used for the combination of communications networks. This device simplifies models of communications networks of communication circuits' users. It also minimizes revision of the conventional design procedure of communications networks that assumes to provide single model of communication circuit.

A combination of Claim 1 and 2 is Claim 3, and a combination of Claim 7 and 8 is Claim 9. The procedure and means for obtaining serial connection of communication circuits are Claim 5 and 11. This device enabled us to obtain the practical combination of communications networks. Here, the most important communication circuit is obtained first, and accessing communication circuits are used if necessary.

Claim 4 is one that omitted the procedure for requesting the accessing communication circuits from Claim 5. Claim 10 is one that omitted a means for requesting the accessing communication circuits from Claim 11. They are effective if we first obtain the main circuits can be realized and we change the structures of the user side communications network.

Claim 6 is a combination of Claim 5 and 2, and Claim 12 is a combination of Claim 11 and 8. The Claims for methods, the Claim 1, 2, 3, 4, 5, and 6 are respectively correspond to the Claims for apparatuses, the Claim 7, 8, 9, 10, 11, and 12.

### BRIEF EXPLANATION OF DRAWINGS

### 〈〈Section 14: Brief explanation of〉〉

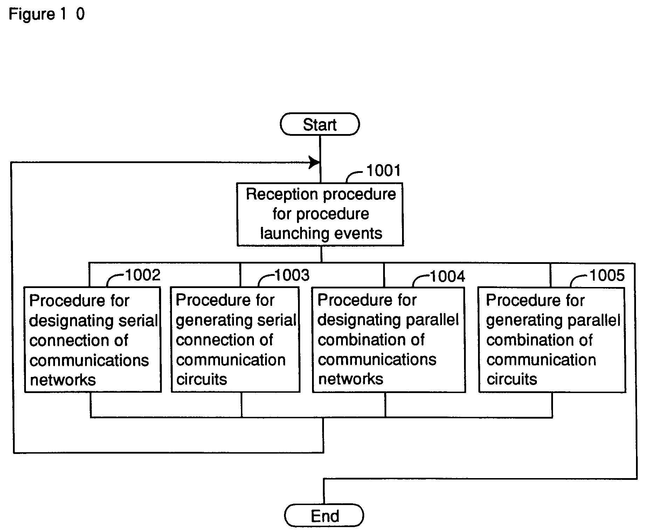

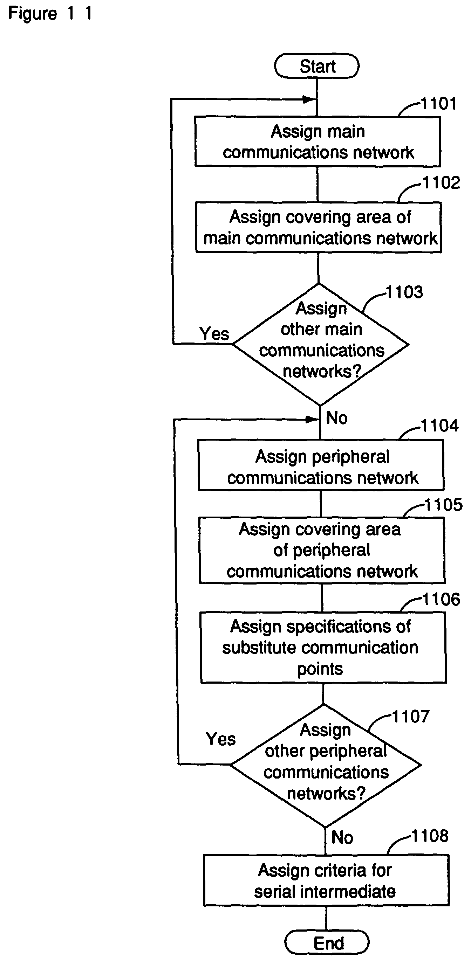

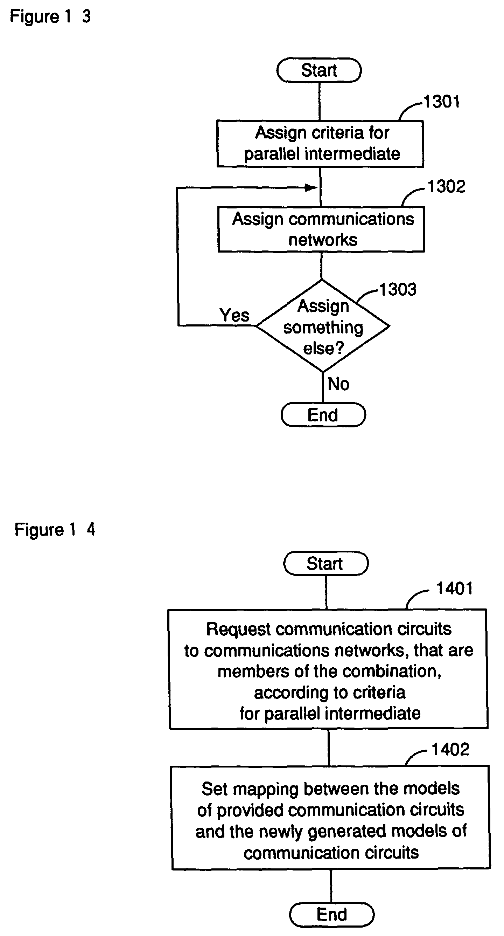

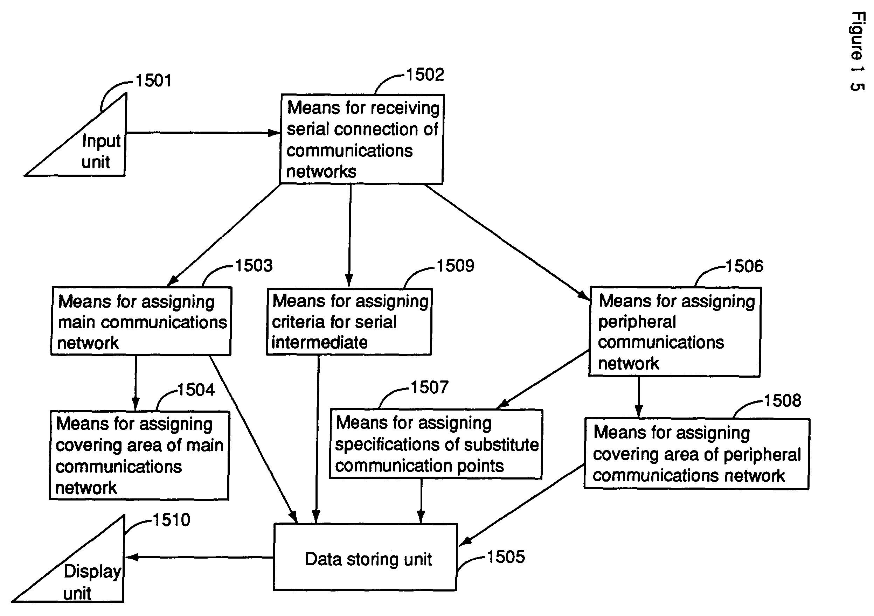

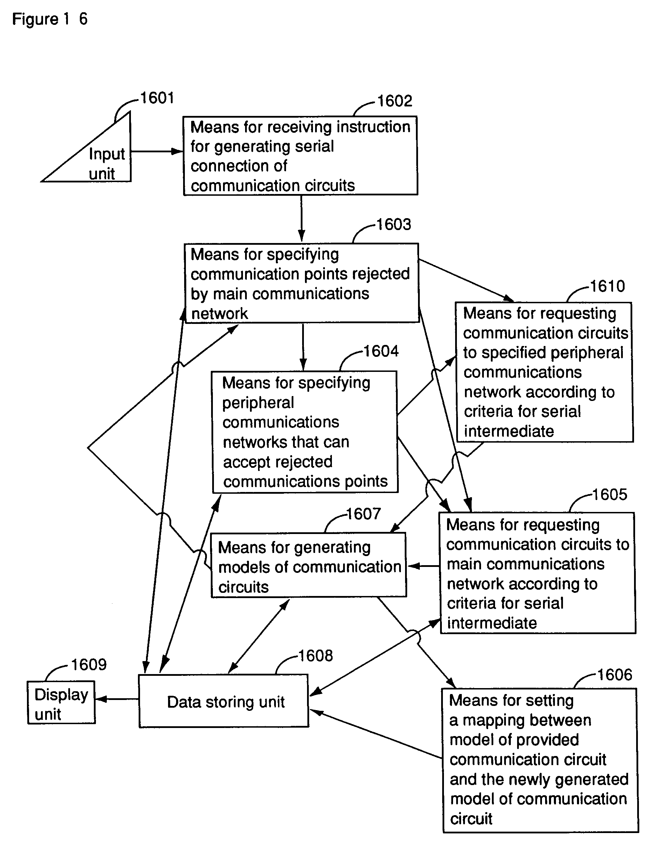

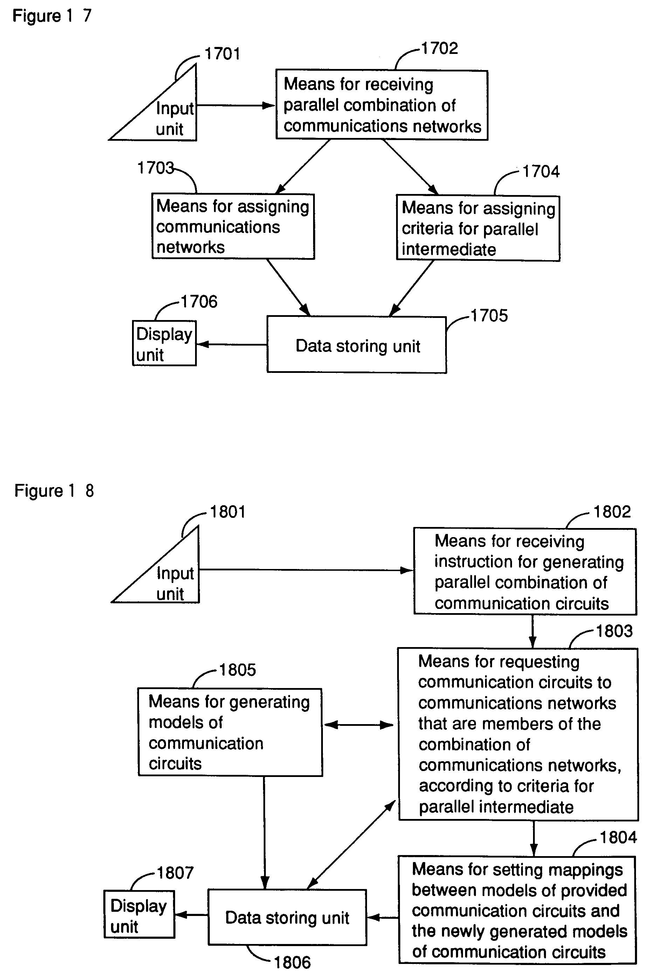

FIG. 1 is the example of parallel combination of communication circuits. FIG. 2 is the example of serial connection of communication circuits. FIG. 3 is the example of the combination of communications networks (relevant to FIG. 2) for serial connection. FIG. 4 is the combination of communications networks in a case of generating serial connection of communication circuits by a series of peripheral communications networks. FIG. 5 is the case in which serial connection of communication circuits is generated by a series of peripheral communications networks. FIG. 6 is the example of parallel combination of communications networks. FIG. 7 is the example of connection of the models of communication circuits defined for a combination of communications networks. FIG. 8 is the example of a combination of communications networks, which assigned a combination of communications networks. FIG. 9 is the common structure of computers that carrying out a program, that is an embodiment of the method for generating a combination of communication circuits. FIG. 10 is the example of structure of a program that realized the method for generating a combination of communication circuits. FIG. 11 is the details of the procedure for designating serial connection of communications networks. FIG. 12 is the details of the procedure for generating serial connection of communication circuits. FIG. 13 is the details of the procedure for designating parallel combination of communications networks. FIG. 14 is the details of the procedure for generating parallel combination of communication circuits. FIG. 15 is the diagram of apparatus for designating serial connection of communications networks. FIG. 16 is the diagram of apparatus for generating serial connection of communication circuits. FIG. 17 is the diagram of apparatus for designating parallel combination of communications networks. FIG. 18 is the diagram of apparatus for generating parallel combination of communication circuits.

### BEST MODE OF CARRYING OUT THE INVENTION

### 〈〈Section 15: Embodiment of the method for generating combination of communication circuits〉〉

One embodiment of the method for generating a combination of communication circuits is to realize as a computer program. FIG. 9 shows the general structure of a computer. A combination of communications networks is generated by central processing unit 903 according to data input from input unit 901 and is recorded on the main memory unit 904. A combination of communications networks is shown in display unit 902 according to the input from input unit 901 or instruction of other programs. Besides, a program generating a combination of communication circuits is carried out according to the input from input unit 901 or instruction of other programs. Data in main memory unit 904 can be recorded on the secondary memory unit 905 and be read in when a procedure is re-launched.

FIG.10 shows the structure of this program. Every time the event launching procedures is generated, this event is analyzed in 〈〈reception procedure for procedure launching events〉〉 1001 and a corresponding procedure is launched.
Sometimes one procedure generates events launching procedures. Corresponding to these events, there are procedures to be launched as follow. 〈〈Procedure for designating serial connection of communications networks〉〉 1002. 〈〈Procedure for generating serial connection of communication circuits〉〉 1003. 〈〈Procedure for designating parallel combination of communications networks〉〉 1004. And 〈〈procedure for generating parallel combination of communication circuits〉〉 1005. Details of each procedure will be explained in the following. Although the procedures for evaluating or using a combination of communication circuits can be added, they are omitted since their details are different for every application.

The above program structure is for cases of receiving data of a combination of communications networks and generating the combination of communication circuits by one process of a computer.
There is another embodiment that receives data of a combination of communications networks or instructions for generating communication circuits from other processes of same computer, different computers or external memory apparatuses connected by communication circuits, and so on.

### 〈〈Section 15.1: Procedure for designating serial connection of communications networks〉〉

FIG. 11 shows the embodiment of the procedure for designating serial connection of communications networks. It 〈〈assigns main communications network〉〉 1101 and then 〈〈assigns covering area of main communications network〉〉 1102. It should repeat those steps when assigning plural main communications networks. It 〈〈assigns peripheral communications network〉〉 1104 and 〈〈assigns covering area of peripheral communications network〉〉 1105 and 〈〈assigns specifications of substitute communication points〉〉 1106. It should repeat the steps from 〈〈assigning peripheral communications network〉〉 1104 when assigning plural peripheral communications networks. Finally, it 〈〈assigns criteria for serial intermediate〉〉 1108.

### 〈〈Section 15.2: Procedure for generating serial connection of communication circuits〉〉

FIG. 12 shows the embodiment of the procedure for generating the serial connection of communication circuits. For the request for communication circuits to a combination of communications networks, the procedure first 〈〈specifies communication points rejected by main communications network〉〉 1201. If there are rejected communication points, then it 〈〈specifies peripheral communications networks that can accept the rejected communication points〉〉 1203. It repeats these steps for every rejected communication points. And then, it 〈〈requests communication circuits to specified peripheral communications networks according to criteria for serial intermediate〉〉 1205 and 〈〈requests communication circuits to main communications network according to criteria for serial intermediate〉〉 1206. If there are no rejected communication points in the procedure for 〈〈specifying communication points rejected by main communications network〉〉 1201, then the procedure for 〈〈requesting communication circuits to specified peripheral communications networks according to criteria for serial intermediate〉〉 1205 is skipped. Finally, it 〈〈sets mapping between the models of provided communication circuits and the newly generated models of communication circuits〉〉 1207. The above steps correspond to Claim 6.

The procedure for 〈〈requesting communication circuits to specified peripheral communications networks according to criteria for serial intermediate〉〉 1205 and the procedure for 〈〈requesting communication circuits to main communications network according to criteria for serial intermediate〉〉 1206 correspond to Claim 1. The procedure for 〈〈setting mapping between models of provided communication circuits and the newly generated models of communication circuits〉〉 1207 corresponds to Claim 2.

Claim 3 is corresponding to the group of the following procedures. The procedure for 〈〈requesting communication circuits to specified peripheral communications networks according to criteria for serial intermediate〉〉 1205. The procedure for 〈〈requesting communication circuits to main communications network according to criteria for serial intermediate〉〉 1206. And, the procedure for 〈〈setting mapping between models of provided communication circuits and the newly generated models of communication circuits〉〉1207.

The procedure for 〈〈specifying communication points rejected by main communications network〉〉 1201, the procedure for 〈〈specifying peripheral communications networks that can accept the rejected communication points〉〉 1203, and the procedure for 〈〈requesting communication circuits to specified peripheral communications networks according to criteria for serial intermediate〉〉 1205 correspond to Claim 4. Claim 5 includes the procedure for 〈〈requesting communication circuits to main communications network according to criteria for serial intermediate〉〉 1206 in addition to Claim 4.

### 〈〈Section 15.3: Procedure for designating parallel combination of communications networks〉〉

FIG. 13 shows the embodiment of the procedure for designating parallel combination of communications networks. It first 〈〈assigns criteria for parallel intermediate〉〉 1301 and 〈〈assigns communications networks〉〉 1302. In the example of FIG. 1, it 〈〈assigns communications networks〉〉 1302 twice since both N communications network 102 and D communications network 103 are treated. As a result, N communications network and D communications network are set to Z combination of communications networks 601 of FIG. 6. Besides, it can 〈〈assigns criteria for parallel intermediate〉〉 1301 at last.

### 〈〈Section 15.4: Procedure for generating parallel combination of communication circuits〉〉

FIG. 14 shows the embodiment of the procedure for generating parallel combination of communication circuits. For the request for communication circuits to a combination of communications networks, the process 〈〈requests communication circuits to communications networks, that are members of the combination, according to criteria for parallel intermediate〉〉 1401. And then, it 〈〈sets mapping between models of provided communication circuits and the newly generated models of communication circuits〉〉 1402. Each of them respectively corresponds to Claim 1 and Claim 2. A combination of them corresponds to Claim 3.

### 〈〈Section 16: Embodiments as apparatuses〉〉

One way is to implement as one apparatus that receives both serial and parallel combinations of communications networks and to generate serial and parallel connection of communication circuits.

There is another embodiment that realizes by dividing apparatuses into four types: apparatus for designating serial connection of communications networks, apparatus for generating serial connection of communication circuits, apparatus for designating parallel combination of communications networks, and apparatus for generating parallel combination of communication circuits. If these apparatuses are connected by communication circuits or communication paths (such as bath circuit of computers) and are able to exchange information, then it can provide sufficient function as a whole.

Even if these apparatuses are not connected by the communication circuits or the communication paths, data can be exchanged by writing those information out on the memory media such as a floppy disk, CD-ROM, a magnetic tape, or a hard disk and reading them in.

The individual embodiments of these divided apparatuses are shown in the following. When realizing some of these apparatuses together, data can be exchanged smoothly by using identical data storing unit (1505, 1608, 1705, 1806). Input unit (1501, 1601, 1701, 1801) and Display unit (1510, 1609, 1706, 1807) also can be respectively identical.

### 〈〈Section 16.1: Apparatus for designating serial connection of communications networks〉〉

FIG. 15 shows the embodiment of the apparatus for designating serial connection of communications networks. It analyzes a signal from 〈〈input unit〉〉 1501 by 〈〈means for receiving serial connection of communications networks〉〉 1502. If data is main communications network, this data is passed to 〈〈means for assigning main communications network〉〉 1503, as a signal. If data is covering area of main communications network, then this data is passed to 〈〈means for assigning the covering area of main communications network〉〉 1504 as a signal. These data are recorded in 〈〈data storing unit〉〉 1505.

If 〈〈means for receiving serial connection of communications networks〉〉 1502 finds that the data is peripheral communications networks by, it passes this data to 〈〈means for assigning peripheral communications network〉〉 1506. If the data is covering area of the peripheral communications network, then this data is passed to 〈〈means for assigning covering area of peripheral communications network〉〉 1508 as a signal. And if the data is the specifications of substitute communication points, then this data is passed to 〈〈means for assigning specifications of substitute communication point〉〉 1507 as a signal. These data are recorded in the 〈〈data storing unit〉〉 1505.

If 〈〈means for receiving serial connection of communications networks〉〉 1502 finds that the data is criteria for serial intermediate by, then it pass this data to 〈〈means for assigning criteria for serial intermediate〉〉 1509 as a signal. These data are recorded in 〈〈data storing unit〉〉 1505. The combination of communications networks recorded in 〈〈data storing unit〉〉 1505 is shown in 〈〈display unit〉〉 1510. Operators evaluate them and input new instructions to 〈〈input unit〉〉 1501.

### 〈〈Section 16.2: Apparatus for generating serial connection of communication circuits〉〉

FIG. 16 shows the embodiment of the apparatus for generating serial connection of communication circuits. Suppose that the data of serial connection of communications networks has been already recorded in 〈〈data storing unit〉〉 1608.

The signal input from 〈〈input unit〉〉 1601 (or the signal from a means for generating models of communications circuit and so on) is analyzed by 〈〈means for receiving instruction for generating serial connection of communication circuits〉〉 1602. The request for communication circuits to a combination of communications networks is passed to 〈〈means for specifying communication points rejected by main communications network〉〉 1603 as a signal. This means finds communication points rejected by the main communications network among the communication points that are asked to be connected by communication circuits, accessing to 〈〈data storing unit〉〉 1608,. Then the signal reporting this result is passed to 〈〈means for specifying peripheral communications networks that can accept rejected communication points〉〉 1604. This means finds peripheral communications networks that can accept the rejected communication points, accessing 〈〈data holding unit〉〉 1608 again. 〈〈Means for specifying communication points that will be rejected by main communications network〉〉 1603 and 〈〈means for specifying peripheral communications networks capable of accepting rejected communication points〉〉 1604 make signals indicating communication points treated by the main communications network (including substitute communication points) and communication points treated by the peripheral communications networks. These signals are sent to 〈〈means for requesting communication circuits to specified peripheral communications network according to criteria for serial intermediate〉〉 1610 and 〈〈means for requesting communication circuits to main communications network according to criteria for serial intermediate〉〉 1605.

These requests for communication circuits are reported as a signals to 〈〈means for generating models of communication circuits〉〉 1607, and the models of communication circuits are generated by accessing to 〈〈data storing unit〉〉 1608. If the models of communication circuits cannot be generated, then it again reports the communication point (including substitute communication points) treated by the main communications network as a signals to 〈〈means for specifying communication points rejected by main communications network〉〉 1603 (c.f. Section 9.9).

After communication circuits are all generated, these results are a sent to 〈〈means for setting a mapping between model of provided communication circuit and the newly generated model of communication circuit〉〉 1606. Here, 〈〈data storing unit〉〉 1608 are accessed and mappings among related communication circuits are set Models of communication circuits and models of combination of communication circuits in 〈〈data storing unit〉〉 1608 are shown in 〈〈display unit〉〉 1609. The above corresponds to Claim 12.

〈〈Means for requesting communication circuits to specified peripheral communications network according to criteria for serial intermediate〉〉 1610 and 〈〈means for requesting communication circuits to main communications network according to criteria for serial intermediate〉〉 1605 correspond to Claim 7.

〈〈Means for setting a mapping between models of provided communication circuits and the newly generated model of communication circuit〉〉 1606 corresponds to Claim 8.

〈〈Means for requesting communication circuits to specified peripheral communications network according to criteria for serial intermediate〉〉 1610, 〈〈means for requesting communication circuits to main communications network according to criteria for serial intermediate〉〉 1605, and 〈〈means for setting a mapping between provided communication circuit and the newly generated communication circuit〉〉 1606 correspond to Claim 9.

〈〈Means for specifying communication points rejected by main communications network〉〉 1603, 〈〈means for specifying peripheral communications networks that can accept rejected communication points〉〉 1604, and 〈〈means for requesting communication circuits to specified peripheral communications network according to criteria for serial intermediate〉〉 1610 correspond to Claim 10. Claim 10 and 〈〈means for requesting communication circuits to main communications network according to criteria for serial intermediate〉〉 1605 is Claim 11.

### 〈〈Section 16.3: Apparatus for designating parallel combination of communications networks〉〉

FIG. 17 shows the embodiment of the apparatus for designating parallel combination of communications networks. If 〈〈means for receiving parallel combination of communications networks〉〉 1702 finds that a signal from 〈〈input unit〉〉 1701 is data assigning communications network, it sends a signal is to 〈〈means for assigning communications networks〉〉 1703. If the data is related to the criteria for parallel intermediate, a signal of this data is sent to 〈〈means for assigning criteria for parallel intermediate〉〉 1704.

The data from 〈〈means for assigning communications networks〉〉 1703 and 〈〈means for assigning criteria for parallel intermediate〉〉 1704 are recorded in 〈〈data storing unit〉〉 1705. The data in 〈〈data storing unit〉〉 1705 are shown in 〈〈display unit〉〉 1706.

### 〈〈Section 16.4: Apparatus for generating parallel combination of communication circuit〉〉

FIG. 18 shows the embodiment of apparatus for generating parallel combination of communication circuits. Suppose that the data of parallel combination of communications networks has been already recorded in 〈〈data storing unit〉〉 1806.

The signal input from 〈〈input unit〉〉 1801 (or the signal from a means for generating models of communications circuits and so on) is analyzed by 〈〈means for receiving instruction for generating parallel combination of communication circuits〉〉 1802.

A request for communication circuits to combination of communications networks is sent to 〈〈means for requesting communication circuits to communications networks that are members of the combination of communications networks, according to criteria for parallel intermediate〉〉 1803, as a signal. This means accesses to 〈〈data storing unit〉〉 1806 and analyzes the criteria for parallel intermediate and sends a launching signal to 〈〈means for generating models of communication circuits〉〉 1805.

〈〈Means for generating models of communication circuits〉〉 1805 generates the models of communication circuits in 〈〈data storing unit〉〉 1806. 〈〈Means for requesting communication circuits to communications networks that are members of the combination of communications networks, according to criteria for parallel intermediate〉〉 1803 reports the communication circuits obtained, as a signal to 〈〈means for setting mappings between models of communication circuits and the newly generated models of communication circuits〉〉 1804. This means sets mappings to the related communication circuits, by accessing to 〈〈data storing unit〉〉 1608. The models held in 〈〈data storing unit〉〉 1608 are shown in 〈〈display unit〉〉 1609.

〈〈Means for requesting communication circuits to communications networks that are members of the combination of communications networks, according to criteria for parallel intermediate〉〉 1803 corresponds to Claim 7. 〈〈Means for setting mappings between models of provided communication circuits and the newly generated models of communication circuits〉〉 1804 corresponds to Claim 8. Claim 9 corresponds both of them.

### INDUSTRIAL APPLICABILITY

### 〈〈Section 17: Industrial applicability〉〉

Evolution of information networks brought the world many communications networks. For example, the Internet provides inexpensive communication circuits, which pass through communication circuits and computers both of them are provided voluntary. Meanwhile, some commercial communications networks provide high quality communication circuits superior maintenance in confidentiality or availability. Based on their management strategies, the communications networks determine and present their users the menus for providing communication circuits, showing grade, price, quality of service, and area for the communication circuits to be provided.

For users of the communication circuits, it is the big problem how to combine, select and utilize these communication circuits. In order to fulfill the objective quality of service and still obtain communication circuits that are as economical as possible, the procedure has to search combinations of communications circuits provided by plural communications networks and plural communication media. In a case of international communication, it has to clarifies combinations of communication circuits (provided by plural communications networks) consisting the international communication, in order to evaluate its quality of service accurately.

This invention is effective for obtaining the combinations of communication circuits provided by plural communications networks and plural communication media. It is especially suited the practical method or apparatus that first determines the communication circuits, that are the decisive factors of price and quality of service, and next obtains necessary accessing communication circuits. The methods or apparatuses of this invention can be also used for selecting the best combination of communication circuits among the obtained plural combinations of communication circuits.

This invention can be used for designing communication circuits connecting assigned communication points or for generating design drawings for communications networks. The design drawings have to be generated even when the structures of communication circuits are changed drastically in accordance with traffic fluctuation or of disaster. According to the design drawings, we judge the possibility of realization and effectiveness and issues order of communication circuits, communication media and combination of them. By this invention, we can obtain the design drawings for communication circuits with accessing communication circuits and can do practical actions.

## Claims

1. A method for generating a combination of communication circuits, comprising:
a process for converting a request for a communication circuit to a communications network defined as a combination of communications networks into a request for a communication circuit to individual said communications network.

2. A method for generating a combination of communication circuits, comprising:
a process for set mapping between a model of a communication circuit and a communication circuit model of the combination of communications networks.

3. A method for generating a combination of communication circuits, comprising:
(a) a process for converting said request for said communication circuits to said communications network defined by a combination of communications networks into a request for communication circuits to individual said communications networks; and
(b) a process to set a mapping between a model of communication circuit generated for said request and a communication circuit model of said combination of communications networks.

4. A method to generate a combination of communication circuits, comprising:
(a) a procedure to specify a communication point rejected by a communications network among communication points connected by communication circuits requested, and
(b) a procedure to specify a communication point that is a substitute of the rejected communication point, and
(c) a procedure to replace the communication point rejected by the communications network among the communication points that were supposed to be connected by the requested communication circuit requested, with the communication point assigned as substitute, and to request a communication circuit connecting them.

5. The method to generate a combination of communication circuits, according to Claim 4, comprising:
a procedure to request another communications network for circuit that connects the rejected communication point with the substitute communication point.

6. The method to generate a combination of communication circuits, according to Claim 5, comprising:
a procedure to set mapping between a model of a communication circuits that was generated for the request and a communication circuit model of the combination of communications networks.

7. The apparatus for generating said combination of said communication circuits, comprising:
a means for converting a request for a communication circuit to a communications network defined by a combination of communications networks into a request for a communication circuits to individual communications networks.

8. The apparatus for generating said combination of said communication circuits, comprising:
a means for set mapping between a model of a communication circuit and a communication circuit model of a combination communications networks.

9. The apparatus for generating said combination of said communication circuits, comprising:
(a) a means for converting a request for a communication circuit to a communications network defined by a combination of communications networks into a request for a communication circuits to individual communications networks; and
(b) a means for set mapping between a model of a communication circuit generated for a request to a communication circuit model of a combination of communications networks.

10. An apparatus for generating a combination of communication circuits, comprising:
(a) a means for specifying a communication point rejected by a communications network among communication points connected by communication circuits requested, and
(b) a means for specifying a communication point that is a substitute of the rejected communication point, and
(c) a means for replacing the communication point rejected by the communications network among the communication points that were supposed to be connected by the requested communication circuit requested, with the communication point assigned as substitute, and to request a communication circuit connecting them.

11. The apparatus for generating a combination of communication circuits, according to Claim 10, comprising:
a means for requesting another communications network for circuit that connects the rejected communication point with the substitute communication point.

12. The apparatus for generating said combination of said communication circuits as defined in Claim 11, comprising:
a means for set mapping between a model of a communication circuit generated for a request to a communication circuit model of a combination of communications networks.
